## Europäisches Patentamt
## European Patent Office
## Office européen des brevets

(11) Veröffentlichungsnummer: **0 262 441 B1**

# EUROPÄISCHE PATENTSCHRIFT

(45) Veröffentlichungstag der Patentschrift: **27.03.91**

(51) Int. Cl.⁵: **G01F 1/66**

(21) Anmeldenummer: **87112837.7**

(22) Anmeldetag: **02.09.87**

(54) **Ultraschall-Phasendifferenzverfahren zur Messung hoher Strömungsgeschwindigkeiten.**

(30) Priorität: **30.09.86 DE 3633187**

(43) Veröffentlichungstag der Anmeldung:
**06.04.88 Patentblatt 88/14**

(45) Bekanntmachung des Hinweises auf die
Patenterteilung:
**27.03.91 Patentblatt 91/13**

(84) Benannte Vertragsstaaten:
**DE ES FR GB IT SE**

(56) Entgegenhaltungen:
**CH-A- 657 452**
**DE-A- 3 121 778**
**DE-A- 3 230 397**
**FR-A- 2 259 355**
**GB-A- 2 167 857**

(73) Patentinhaber: **Siemens Aktiengesellschaft**
**Wittelsbacherplatz 2**
**W-8000 München 2(DE)**

(72) Erfinder: **Mágori, Valentin, Dipl.-Phys.**
**Limburgstrasse 17**
**W-8000 München 90(DE)**

## Beschreibung

Die vorliegende Erfindung betrifft ein Ultraschall-Phasendifferenzverfahren zur Messung hoher Strömungsgeschwindigkeiten, insbesondere der Ansaugluft für KFZ-Triebwerke, mittels einer Meßanordnung, die durch zwei sich in der Strömungsachse eines Meßrohrs kreuzende Ultraschall-Meßstrecken gebildet ist, wobei die Meßstrecken ihrerseits jeweils zwischen einem UltraschallSendewandler und einem Ultraschall-Empfangswandler definiert sind, welche Ultraschallwandler in der Wandung des Meßrohrs derart angeordnet sind, daß eine der Meßstrecken ihren Ultraschall-Sendewandler stromauf von ihrem Ultraschall-Empfangswandler und die andere der Meßstrecken ihren UltraschallSendewandler stromab von ihrem Ultraschall-Empfangswandler aufweist, wobei die Meßanordnung einen Oszillator, zumindest einen Empfangsverstärker sowie eine Auswerteeinrichtung enthält und wobei die Frequenz des Oszillators und damit mittelbar die Frequenz der ausgesendeten Ultraschallwellen moduliert wird.

Für Ultraschall-Strömungsgeschwindigkeitsmesser nach dem Phasendifferenzverfahren gilt, wie dies bereits an anderer Stelle beschrieben worden ist:

$$\Delta \varphi = 4\pi \cdot f \cdot l \cdot \frac{v}{c^2} \qquad (1),$$

wobei $\Delta\phi$ die gemessene Phasendifferenz, f die Betriebsfrequenz, 1 die effektive Länge der Meßstrecke, v die effektive Strömungsgeschwindigkeit u. c die Schallgeschwindigkeit im Fluid ist.

Zur Erzielung hoher Meßempfindlichkeit ist es wünschenswert, das Verhältnis $\Delta\phi/v$ durch entsprechende Dimensionierung der Meßstrecke möglichst groß zu wählen. Dies würde allerdings dazu führen, daß bei hohen Strömungsgeschwindigkeiten der Eindeutigkeitsbereich des Phasendiskriminators überschritten wird. Dann wird nicht mehr die absolute Phasendifferenz gemessen, sondern eine inkrementale $\Delta\phi'$, die sich aus der absoluten durch Abzug von 2n. $\pi$ (oder n.$\pi$, je nach Art des verwendeten Phasendiskriminators) ergibt:

$$\Delta \varphi' = \Delta \varphi - 2n \cdot \pi$$

bzw.

$$\Delta \varphi' = \Delta \varphi - n \cdot \pi \qquad (2).$$

Der ganzzahlige Faktor n ist im allgemeinen unbekannt. An den Stellen$\Delta\phi$ 2n.$\pi$ (bzw.$\Delta\phi$ = n.$\pi$) kommt es zum störenden Umspringen des Phasendiskriminators.

Deshalb mußten herkömmliche Meßaufbauten bisher so dimensioniert werden, daß die gemessene Phasendifferenz auch bei maximaler Strömungsgeschwindigkeit innerhalb des eindeutigen Bereichs des Phasendiskriminators liegt. Dies bedeutet eine Einengung der Möglichkeiten bei der Gestaltung der Meßstrecke und Verzicht auf mögliche Meßempfindlichkeit.

Insbesondere sind Ultraschall-Strömungsgeschwindigkeitsmeßstrecken für die Ansaugluft von Kraftfahrzeugmotoren wegen der hohen maximalen Durchflußgeschwindigkeit ($v_{max} \approx 400$ m³/h,$\phi \approx 60$ mm) und der niedrigen Schallgeschwindigkeit in Luft nur durch Wahl einer niedrigen Ultraschallfrequenz dimensionierbar. Die Verwendung niedriger Frequenzen ist jedoch u. a. wegen des hohen Störpegels bei niedrigen Freqenzen problematisch.

Aus der GB-A-2 167 857 ist bereits ein Ultraschall-Phasen-differenzverfahren zur Messung hoher Strömungsgeschwindigkeiten mittels einer Meßanordnung, die durch zwei sich in der Strömungsachse eines Meßrohrs kreuzende Ultraschall-Meßstrecken gebildet ist, bekannt, wobei die Meßstrecken ihrerseits jeweils zwischen einem Ultraschall-Sendewandler und einem Ultraschall-Empfangswandler definiert sind, welche Ultraschall-wandler in der Wandung des Meßrohrs derart angeordnet sind, daß eine der Meßstrecken ihren Ultraschall-Sendewandler stromauf von ihrem Ultraschall-Empfangswandler und die andere der Meßstrecken ihren Ultraschall-Sendewandler stromab von ihrem Ultraschall-Empfangswandler aufweist, wobei die Meßanordnung einen Oszillator, zumindest einen Empfangsverstärker sowie eine Auswerteeinrichtung enthält und wobei die Frequenz des Oszillators mittels eines Modulators und damit mittelbar die Frequenz der ausgesendeten Ultraschallwellen moduliert wird.

Aus der FR-A-2 259 355 ist eine Anordnung zur Messung der Luftmenge in dem Ansaugrohr einer Brennkraftmaschine mit zwei in dem Ansaugrohr enthaltenen Meßstrecken bekannt, wobei die Meßstrecken aus einem gemeinsamen Ultraschall-Sendewandler und zwei individuellen Ultraschall-Empfangswandlern gebildet sind.

Der vorliegenden Erfindung liegt die Aufgabe zugrunde, ein Ultraschall-Phasendifferenzverfahren zur Messung hoher Strömungsgeschwindigkeiten zu schaffen, das auf einfache Weise die dem Stand der Technik anhaftenden Probleme beseitigt.

Zur Lösung dieser Aufgabe wird ein Ultraschall-Phasendifferenzverfahren der eingangs genannten Art und gemäß dem Oberbegriff des Patentanspruchs 1 vorgeschlagen, das durch die in dem kennzeichnenden Teil des Patentanspruchs I angegebenen Merkmale charakterisiert ist.

Vorteilhafte Weiterbildungen der Erfindung sind durch die in den Unteransprüchen angegebenen Merkmale gekennzeichnet.

Im folgenden wird die Erfindung anhand mehrerer Figuren, die bevorzugte Ausführungsbeispiele für die Erfindung betreffen, im einzelnen beschrieben.

Fig. 1   zeigt eine Diagrammdarstellung betreffend die Modulation der Phasendifferenz durch Frequenzmodulation des Ultraschalls mit strömungsgeschwindigkeitsproportionaler Steilheit der Modulationskennlinie.

Fig. 2   zeigt eine Diagrammdarstellung betreffend die Erkennung von Unstetigkeiten der Modulationskennlinie.

Fig. 3   zeigt eine Prinzipdarstellung eines ersten Ausführungsbeispiels für eine Meßanordnung zur Durchführung des erfindungsgemäßen Verfahrens.

Fig. 4   zeigt eine Prinzipdarstellung eines zweiten Ausführungsbeispiels für eine Meßanordnung mit hoher Auflösung zur Durchführung des erfindungsgemäßen Verfahrens.

Fig. 5   zeigt eine Prinzipdarstellung eines dritten Ausführungsbeispiels für eine Meßanordnung zur Durchführung des erfindungsgemäßen Verfahrens, wobei diese Meßanordnung einen Mikroprozessor verwendet.

Bei Frequenzmodulation des Ultraschalls wird die Differenz der Phasen der Empfangssignale moduliert. Die Steilheit der Modulationskennlinie

$$\frac{d}{df}(\Delta \varphi) = 4\pi \cdot l \cdot \frac{v}{c^2} \quad (3)$$

ist strömungsgeschwindigkeitsproportional. Dies gilt bei hohen Strömungsgeschwindigkeiten außerhalb der Sprungstellen des Phasendiskriminators auch für die inkrementale Phasendifferenz

$$\frac{d}{df}(\Delta \varphi') = 4\pi \cdot l \cdot \frac{v}{c^2} \quad (3')$$

$$\text{für } \varphi \neq 2n \cdot \pi$$
$$\text{bzw. } \varphi \neq n \cdot \pi .$$

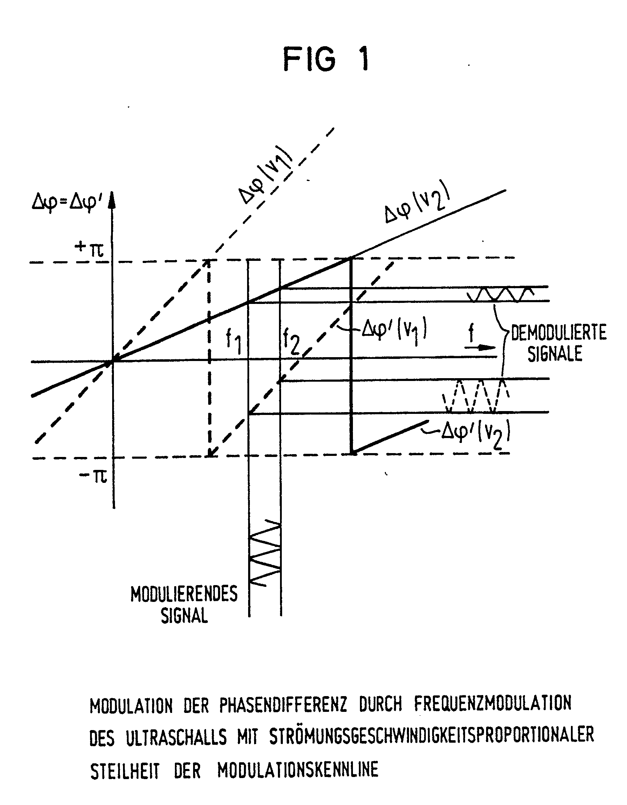

Daher ist bei Frequenzmodulation des Ultraschalls im Ausgangssignal des Phasendiskriminators ein Wechselspannungsanteil als "demoduliertes Signal" enthalten, dessen Amplitude der Strömungsgeschwindigkeit proportional ist, vergl. Fig. 1.

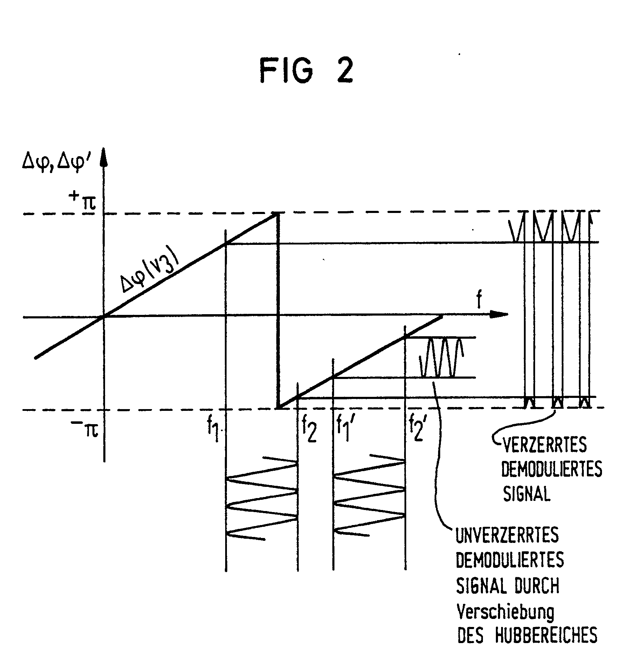

Im Falle, daß der Frequenzbereich des Ultraschallsignals auf eine (von v abhängige) Unstetigkeitsstelle des Phasendiskriminators fällt, vergl. Fig. 2, kann dies leicht an den Verzerrungen des demodulierten Signals erkannt werden und durch automatische Verschiebung des Frequenzbereichs oder durch Zuschalten eines Phasenschiebers in einen der beiden Sende- oder einen der beiden Empfangswege behoben werden. Da die benötigte Phasenverschiebung vorzugsweise $\pi$ oder $\pi/2$ beträgt, ist sie auch durch logische Manipulation des Sendesignals an einem der beiden Wandler (z. B. durch Frequenzteilung mit Umschalten der Polarität des zu teilenden Oszillatorsignals wie in DE-OS 26 13 375 beschrieben) zu erzielen. Die Steilheit der Modulationskennlinie bleibt durch diese Phasenverschiebungen unbeeinflußt.

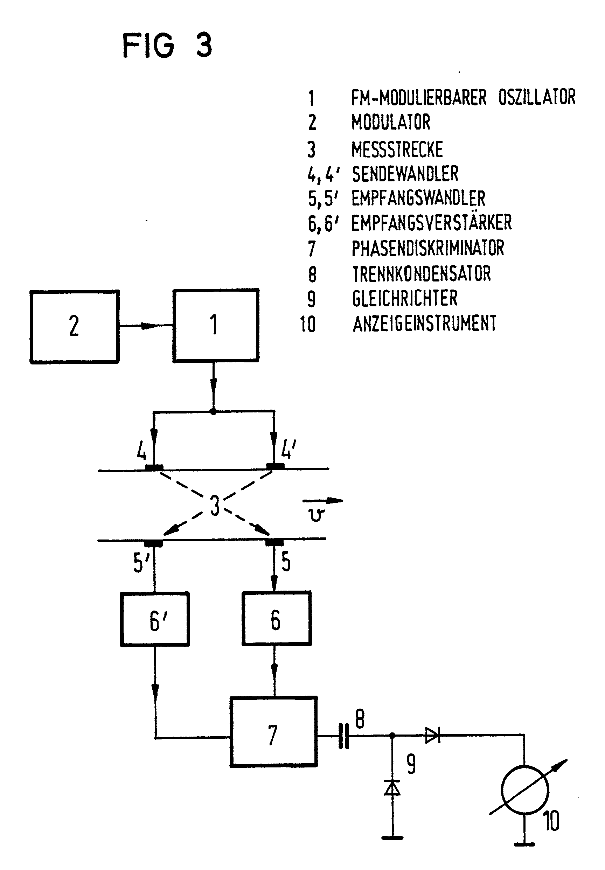

Bei geringeren Genauigkeitsanforderungen kann es durchaus genügen, die Amplitude des demodulierten Signals allein auszuwerten, vergl. die einfache Meßanordnung gemäß Fig. 3.

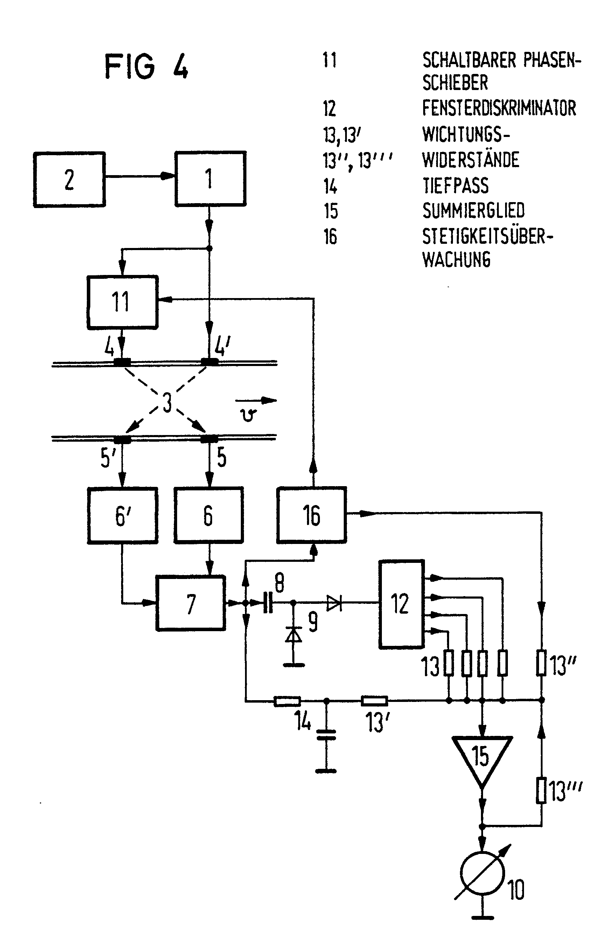

Bei höheren Genauigkeitsanforderungen ist es zweckmäßig, das demodulierte Signal und den der inkrementalen Phasendifferenz entsprechenden Mittelwert der Ausgangsspannung des Phasendiskriminators in der Weise zu kombinieren, daß sich daraus die Gesamtphase mit hoher Genauigkeit ergibt, vergl. die Meßanordnung mit hoher Auflösung gemäß Fig. 4.

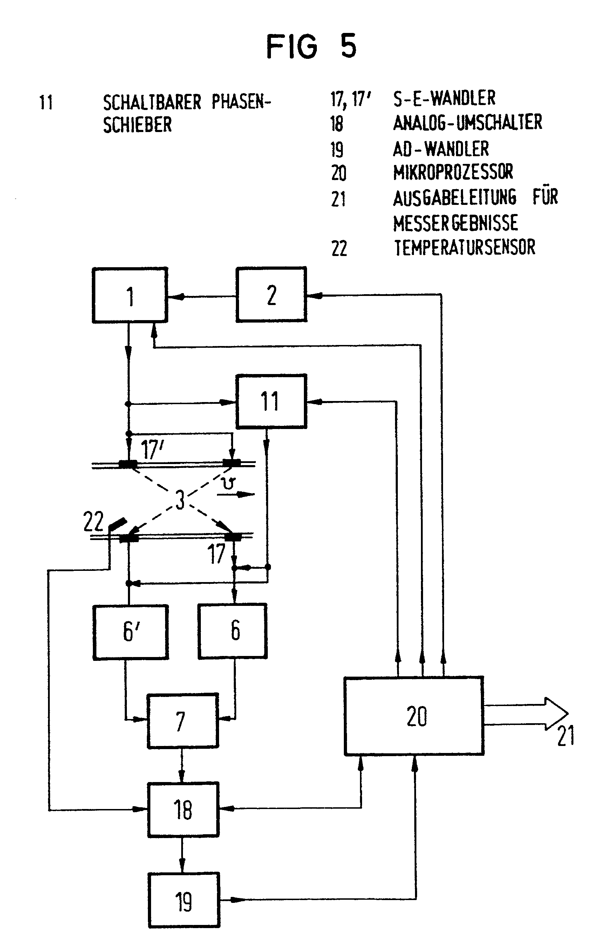

Das Ausgangssignal des Phasendiskriminators kann auch vorteilhaft nach Umsetzung mit einem Analog/Digital-Wandler in einen Mikroprozessor eingespeichert werden, vergl. die Meßanordnung gemäß Fig. 5. Dies ermöglicht die Auswertung des Ausgangssignals des Phasendiskriminators im beschriebenen Sinne. Über einen vom Mikroprozessor gesteuerten Umschalter wäre es möglich, auch noch andere in analoger Form vorliegende Meßwerte (z. B. Temperatur) zu digitalisieren und der Auswertung zuzuführen. Darüber hinaus könnte die Steuerung des Modulators und der gezielten Phasenverschiebung von dem Mikroprozessor durchgeführt werden.

## Ansprüche

1. Ultraschall-Phasendifferenzverfahren zur Messung hoher Strömungsgeschwindigkeiten, insbesondere der Ansaugluft für KFZ-Triebwerke, mittels einer Meßanordnung, die durch zwei sich in der Strömungsachse eines Meßrohrs kreuzende Ultraschall-Meßstrecken gebildet ist, wobei die Meßstrecken ihrerseits jeweils zwischen einem Ultraschall-Sendewandler (4, 4') und einem Ultraschall-Empfangswandler (5, 5') definiert sind, welche Ultraschallwandler in der Wandung des Meßrohrs derart angeordnet sind, daß eine der Meßstrecken ihren UltraschallSendewandler stromauf von ihrem Ultraschall-Empfangswandler und die andere der Meßstrecken ihren Ultraschall-Sendewandler stromab von ihrem Ultraschall-Empfangswandler aufweist, wobei die Meßanordnung einen Oszillator (1), zumindest einen Empfangsverstärker (6, 6') sowie eine Auswerteeinrichtung enthält und wobei die Frequenz des Oszillators (1) mittels eines Modulators (2) und damit mittelbar die Frequenz der ausgesendeten Ultraschallwellen moduliert wird, **dadurch gekennzeichnet**, daß eine sich durch die Meßanordnung zwangsläufig ergebende Differenz der Phasenlagen der Empfangssignale, die von den Ultraschall-Empfangswandlern (5, 5') abgegeben werden, moduliert wird und daß die dabei auftretende Veränderung des Werts der Phasendifferenz, der durch das Ausgangssignal eines mit je einem Eingang an den Ausgang des einen bzw. des anderen von zwei Empfangsverstärkern (6, 6') angeschlossenen Phasendiskriminators (7) repräsentiert wird, mittels der Auswerteeinrichtung (8, 9, 10; 8, 9, 10, 12, 13, 14; 18, 19, 20, 21) ausgewertet oder beurteilt wird.

2. Ultraschall-Phasendifferenzverfahren nach Anspruch 1, **dadurch gekennzeichnet**, daß für den Fall, daß der Frequenzbereich des Ultraschallsignals auf eine von der Strömungsgeschwindigkeit (v) abhängige Unstetigkeitsstelle fällt, was durch Verzerrung des nach einer Demodulation zur Verfügung stehenden, auszuwertenden Signals erkennbar ist, eine diese Verzerrung eliminierende Verschiebung des Frequenzbereichs vorgenommen wird, wobei das auszuwertende Signal den Wechselspannungsanteil der Ausgangsspannung des Phasendiskriminators darstellt.

3. Ultraschall-Phasendifferenzverfahren nach Anspruch 1, **dadurch gekennzeichnet**, daß für den Fall, daß der Frequenzbereich des Ultraschallsignals auf eine von der Strömungsgeschwindigkeit (v) abhängige Unstetigkeitsstelle fällt, was durch Verzerrungen des nach einer Demodulation zur Verfügung stehenden, auszuwertenden Signals erkennbar ist, eine diese Verzerrungen eliminierende Phasenverschiebung in einem der beiden Sendekreise oder in einem der beiden Empfangskreise mittels eines Phasenschiebeglieds vorgenommen wird, wobei das auszuwertende Signal den Wechselspannungsanteil der Ausgangsspannung des Phasendiskriminators darstellt.

4. Ultraschall-Phasendifferenzverfahren nach Anspruch 1, **dadurch gekennzeichnet**, daß für den Fall, daß der Frequenzbereich des Ultraschallsignals auf eine von der Strömungsgeschwindigkeit (v) abhängige Unstetigkeitsstelle fällt, was durch Verzerrungen des nach einer Demodulation zur Verfügung stehenden, auszuwertenden Signals erkennbar ist, eine diese Verzerrungen eliminierende logische Manipulation, vorzugsweise durch eine Frequenzteilung mit einer Umschaltung der Polarität des zu teilenden Oszillator-Aus-gangssignals, vorgenommen wird, wobei das auszuwertende Signal den Wechselspannungsanteil der Ausgangsspannung des Phasendiskriminators darstellt.

# EP 0 262 441 B1

**5.** Ultraschall-Phasendifferenzverfahen nach Anspruch 1, **dadurch gekennzeichnet**, daß im Falle von geringen Meßgenauigkeitsanforderungen allein die Amplitude des demodulierten zu beurteilenden Signals ausgewertet wird, wobei das zu beurteilende Signal den Wechselspannungsanteil der Ausgangsspannung des Phasendiskriminators darstellt.

**6.** Ultraschall-Phasendifferenzverfahren nach Anspruch 1, **dadurch gekennzeichnet**, daß im Falle höherer Meßgenauigkeitsanforderungen das demodulierte zu beurteilende Signal und der der inkrementalen Phasendifferenz entsprechenden Mittelwert der Ausgangsspannung des Phasendiskriminators (7) derart kombiniert werden, daß sich daraus die Gesamtphase mit hoher Genauigkeit ergibt, wobei das zu beurteilende Signal den Wechselspannungsanteil der Ausgangsspannung des Phasendiskriminators darstellt.

**7.** Ultraschall-Phasendifferenzverfahren nach Anspruch 1, **dadurch gekennzeichnet**, daß das Ausgangssignal des Phasendiskriminators (7) nach Umsetzung mittels eines Analog/Digital-Wandlers (19) in einen Mikroprozessor eingegeben wird, der die Auswertung dieses Signals durchführt.

**8.** Ultraschall-Phasendifferenzverfahren nach Anspruch 7, **dadurch gekennzeichnet**, daß vorgesehen ist, daß der Mikroprozessor (20) weitere vorliegende Analogsignale, die zu digitalisieren sind, beispielsweise ein Temperaturmeßwertsignal, die ihm über einen durch ihn gesteuerten Umschalter (18) zugeführt werden, auswertet.

**9.** Ultraschall-Phasendifferenzverfahren nach Anspruch 7, **dadurch gekennzeichnet**, daß der Mikroprozessor (20) die Steuerung des Modulators (2) und/oder der Phasenverschiebung durchführt.

## Claims

**1.** Ultrasonic phase difference method for measuring high flow velocities, preferably the induction air for motor vehicle drive units, by means of a measuring arrangement which is formed by two ultrasonic measured sections which cross in the flow axis of a measuring tube, the measured sections themselves being defined in each case between an ultrasonic transmitting converter (4, 4') and an ultrasonic receiving converter (5, 5'), which ultrasonic converters are arranged in the wall of the measuring tube in such a way that one of the measured sections has its ultrasonic transmitting converter upstream of its ultrasonic receiving converter and the other of the measured sections has its ultrasonic transmitting converter downstream of its ultrasonic receiving converter, the measuring arrangement containing an oscillator (1), at least one receiving amplifier (6, 6') and an evaluation device, and the frequency of the oscillator (1), and thus indirectly the frequency of the transmitted ultrasonic waves, being modulated by means of a modulator (2), characterised in that a difference, resulting unavoidably from the measuring arrangement, of the phase positions of the received signals which are transmitted by the ultrasonic receiving converters (5, 5') is modulated, and in that the change, which occurs in this process, in the value of the phase difference, which is represented by the output signal of a phase discriminator (7) connected by in each case one input to the output of the one or of the other of two receiving amplifiers (6, 6'), is evaluated or analysed by means of the evaluation device (8, 9, 10; 8, 9, 10, 12, 13, 14; 18, 19, 20, 21).

**2.** Ultrasonic phase difference method according to Claim 1, characterized in that in the event that the frequency range of the ultrasonic signal drops to a point of discontinuity dependent on the flow velocity (v), which is apparent due to distortion of the signal to be evaluated which is available after a demodulation, a displacement, which eliminates this distortion, of the frequency range is carried out, the signal to be evaluated constituting the alternating voltage portion of the output voltage of the phase discriminator.

**3.** Ultrasonic phase difference method according to Claim 1, characterized in that in the event that the frequency range of the ultrasonic signal drops to a point of discontinuity dependent on the flow velocity (v), which is apparent due to distortions of the signal to be evaluated which is available after a demodulation, a phase displacement which eliminates these distortions is carried out in one of the two transmitting circuits or in one of the two receiving circuits by means of a phase shift element, the signal to be evaluated constituting the alternating voltage portion of the output voltage of the phase

5

discriminator.

4. Ultrasonic phase difference method according to Claim 1, characterized in that in the event that the frequency range of the ultrasonic signal drops to a point of discontinuity dependent on the flow velocity (v), which is apparent due to distortions of the signal to be evaluated which is available after a demodulation, a logical manipulation which eliminates these distortions is carried out, preferably by means of a frequency division with a reversal of the polarity of the oscillator output signal to be divided, the signal to be evaluated constituting the alternating voltage portion of the output voltage of the phase discriminator.

5. Ultrasonic phase difference method according to Claim 1, characterized in that if a low degree of measuring accuracy is required, only the amplitude of the demodulated signal to be analyzed is evaluated, the signal to be analyzed constituting the alternating voltage portion of the output voltage of the phase discriminator.

6. Ultrasonic phase difference method according to Claim 1, characterized in that, if a higher degree of measuring accuracy is required, the demodulated signal to be analyzed and the average value, corresponding to the incremental phase difference, of the output voltage of the phase discriminator (7) are combined in such a way that the entire phase is thus obtained with a high degree of accuracy, the signal to be analyzed constituting the alternating voltage portion of the output voltage of the phase discriminator.

7. Ultrasonic phase difference method according to Claim 1, characterized in that the output signal of the phase discriminator (7) is entered, after conversion by means of an analog-to-digital converter (19), into a microprocessor which carries out the evaluation of this signal.

8. Ultrasonic phase difference method according to Claim 7, characterized in that provision is made for the microprocessor (20) to evaluate further analog signals present which are to be digitized, for example a temperature measured value signal, which are fed to it via a change-over switch (18) controlled by it.

9. Ultrasonic phase difference method according to Claim 7, characterized in that the microprocessor (20) carries out the control of the modulator (2) and/or of the phase shift.

## Revendications

1. Procédé basé sur la différence de phase d'ultrasons pour mesurer des vitesses d'écoulement élevées, notamment de l'air d'aspiration pour des moteurs de véhicules automobiles, à l'aide d'un dispositif de mesure, qui est formé par deux sections de mesure des ultrasons, qui se croisent sur l'axe d'écoulement d'un tube de mesure, et dans lequel les sections de mesure sont définies, pour leur part, respectivement entre un transducteur d'émission des ultrasons (4,4') et un transducteur de réception des ultrasons (5,5'), lesquels transducteurs à ultrasons sont disposés dans la paroi du tube de mesure de telle sorte que le transducteur d'émission des ultrasons de l'une des sections de mesure est situé en amont du transducteur associé de réception des ultrasons et que le transducteur d'émission des ultrasons de l'autre des sections de mesure est disposé en aval du transducteur associé de réception des ultrasons, et dans lequel le dispositif de mesure contient un oscillateur (1), au moins un amplificateur de réception (6,6') ainsi qu'un dispositif d'évaluation, et dans lequel la fréquence de l'oscillateur (1) est modulée au moyen d'un modulateur (2), ainsi que par conséquent la fréquence des ondes ultrasonores émises, caractérisé par le fait qu'on module une différence, produite nécessairement par le dispositif de mesure, des positions de phase des signaux reçus qui sont délivrés par les transducteurs de réception des ultrasons (5,5'), et qu'on évalue ou on estime, à l'aide du dispositif d'évaluation (8,9,10;8,9, 10,12,13,14;18,19,20,21), la variation, qui apparaît alors, de la valeur de la différence de phase, qui est représentée par le signal de sortie d'un discriminateur de phase (7) raccordé par des entrées respectives aux sorties respectives de l'un et de l'autre de deux amplificateurs de réception (6,6').

2. Procédé basé sur une différence de phase d'ultrasons suivant la revendication 1, caractérisé par le fait

EP 0 262 441 B1

que dans le cas où la gamme des fréquences du signal ultrasonore se situe dans une zone de discontinuité qui dépend de la vitesse d'écoulement (v), ce qui est identifiable à une distorsion du signal devant être évalué, qui est disponible après une modulation, on réalise un décalage, qui élimine cette distorsion, de la gamme de fréquences, le signal devant être évalué représentant la composante de la tension alternative de sortie du discriminateur de phase.

3. Procédé basé sur une différence de phase d'ultrasons suivant la revendication 1, caractérisé par le fait que dans le cas où la gamme des fréquences du signal ultrasonore se situe dans une zone de discontinuité dépendant de la vitesse d'écoulement (v), ce qui est identifiable à des distorsions du signal devant être évalué, disponible après une démodulation, un déphasage, qui supprime ces distorsions, est réalisé dans l'un des deux circuits d'émission ou dans l'un des deux circuits de réception à l'aide d'un circuit de déphasage, le signal devant être évalué représentant la composante alternative de la tension de sortie du discriminateur de phase.

4. Procédé basé sur une différence de phase d'ultrasons suivant la revendication 1, caractérisé par le fait que dans le cas où la gamme des fréquences du signal ultrasonore se situe dans une zone de discontinuité dépendant de la vitesse d'écoulement (v), ce qui est identifiable à des distorsions du signal devant être évalué, disponible après une démodulation, une manipulation logique, qui supprime ces distorsions est réalisée de préférence au moyen d'une division de fréquence avec une commutation de la polarité du signal de sortie de l'oscillateur, devant être subdivisé, le signal de sortie devant être évalué représentant la composante alternative de la tension de sortie du discriminateur de phase.

5. Procédé basé sur une différence de phase d'ultrasons suivant la revendication 1, caractérisé par le fait que dans le cas de faibles exigences du point de vue de la précision de mesure, seule l'amplitude du signal devant être estimé est évaluée, le signal devant être estimé représentant la composante alternative de la tension de sortie du discriminateur de phase.

6. Procédé basé sur une différence de phase d'ultrasons suivant la revendication 1, caractérisé par le fait que dans le cas d'exigences accrues du point de vue de la précision de mesure, on combine le signal démodulé devant être évalué et la valeur moyenne, correspondant à la différence de phase incrémentale, de la tension de sortie du discriminateur de phase (7) de manière à obtenir, à partir de ces valeurs, la phase totale avec une précision élevée, le signal devant être évalué représentant la composante alternative de la tension de sortie du discriminateur de phase.

7. Procédé basé sur une différence de phase d'ultrasons suivant la revendication 1, caractérisé par le fait que le signal de sortie du discriminateur de phase (7) est introduit, après conversion à l'aide d'un convertisseur analogique/numérique (19), dans un microprocesseur, qui réalise l'évaluation de ce signal.

8. Procédé basé sur une différence de phase d'ultrasons suivant la revendication 7, caractérisé par le fait qu'il est prévu que le microprocesseur (20) évalue d'autres signaux analogiques présents, qui doivent être numérisés, par exemple un signal de valeur de mesure de température, qui lui sont envoyés par l'intermédiaire d'un commutateur (18) qu'il commande.

9. Procédé basé sur une différence de phase d'ultrasons suivant la revendication 7, caractérisé par le fait que le microprocesseur (20) réalise la commande du modulateur (2) et/ou du déphasage.

7

# FIG 1

MODULATION DER PHASENDIFFERENZ DURCH FREQUENZMODULATION
DES ULTRASCHALLS MIT STRÖMUNGSGESCHWINDIGKEITSPROPORTIONALER
STEILHEIT DER MODULATIONSKENNLINE

# FIG 2

## FIG 3

1 FM-MODULIERBARER OSZILLATOR
2 MODULATOR
3 MESSSTRECKE
4,4' SENDEWANDLER
5,5' EMPFANGSWANDLER
6,6' EMPFANGSVERSTÄRKER
7 PHASENDISKRIMINATOR
8 TRENNKONDENSATOR
9 GLEICHRICHTER
10 ANZEIGEINSTRUMENT

# FIG 4

| | |
|---|---|
| 11 | SCHALTBARER PHASEN-SCHIEBER |
| 12 | FENSTERDISKRIMINATOR |
| 13, 13′ | WICHTUNGS- |
| 13′′, 13′′′ | WIDERSTÄNDE |
| 14 | TIEFPASS |
| 15 | SUMMIERGLIED |
| 16 | STETIGKEITSÜBER-WACHUNG |

11

# FIG 5

| 11 | SCHALTBARER PHASEN-SCHIEBER | 17, 17' | S-E-WANDLER |
|---|---|---|---|
| | | 18 | ANALOG-UMSCHALTER |
| | | 19 | AD-WANDLER |
| | | 20 | MIKROPROZESSOR |
| | | 21 | AUSGABELEITUNG FÜR MESSERGEBNISSE |
| | | 22 | TEMPERATURSENSOR |